# EUROPEAN PATENT SPECIFICATION

(11) **EP 2 516 893 B1**
(45) Date of publication and mention of the grant of the patent: **19.03.2014**
(21) Application number: 10805749.8
(22) Date of filing: 24.12.2010
(51) Int. Cl.: F16H 37/02

(54) **AUTOMATIC TRANSMISSION WITH TORQUE CONVERTER, A DNR GEAR GROUP, AND A CVT UNIT AND METHOD OF OPERATING THE SAME**
AUTOMATIKGETRIEBE MIT DREHMOMENTUMWANDLER UND DNR-GRUPPE SOWIE CVT-EINHEIT UND BETRIEBSVERFAHREN DAFÜR
TRANSMISSION AUTOMATIQUE AVEC CONVERTISSEUR DE COUPLE, GROUPE D'ENGRENAGES DNR, UNITE CVT ET PROCEDE DE FONCTIONNEMENT CORRESPONDANT

(30) Priority: 24.12.2009 NL 1037587
(43) Date of publication of application: 31.10.2012
(73) Proprietor: Robert Bosch GmbH, 70442 Stuttgart (DE)
(72) Inventor: DAS, Paul, NL-5000 AM Tilburg (NL); VAN DE WIEL, Ard, NL-5000 AM Tilburg (NL); SCHOLTEN, Stef, NL-5000 AM Tilburg (NL)
(74) Representative: Plevier, Gabriel Anton Johan Maria
(86) International application number: PCT/NL2010/000177
(87) International publication number: WO 2011/078655

(56) References cited:
- EP-A1- 1 808 619
- EP-A2- 1 391 636
- EP-A2- 1 939 503
- DE-A1- 10 358 280
- US-A- 5 895 335
- US-A1- 2004 014 547

## Description

The invention relates to an automatic transmission for transmitting a mechanical power between a driving engine and a driven load, in particular for a vehicle with an internal combustion engine, which automatic transmission successively comprises, in the drive direction, a torque converter, a shiftable Drive-Neutral-Reverse or DNR gear group and a Continuously Variable Transmission or CVT unit. Such an automatic transmission is generally known and is described, for example, in European patent publication EP 1 939 503 A.

The torque converter of the known automatic transmission as such is also generally known and is used to allow the internal combustion engine to run when the vehicle is stationary, as well as to increase the torque generated by the engine when accelerating the vehicle, in particular from a standstill. The nominal torque ratio of the torque converter, that is to say the ratio between the torque on a stationary output shaft of the torque converter and the torque on the input shaft thereof which is connected to the running internal combustion engine, is in practice often chosen to be between 1.5 and 2.5. The known torque converter is provided with a so-called lock-up clutch which can be closed in order to directly connect the input shaft and the output shaft of the torque converter in the mechanical sense to one another. Thus, the loss of power of the torque converter is minimized once the vehicle has gained speed.

The CVT unit of the known automatic transmission is of the drive belt/pulley type provided with a primary pulley on a primary shaft, or a secondary pulley on the secondary shaft and of a drive belt which is wound around the pulleys and connects these to one another. Each of the two pulleys comprises two conical discs, at least one of which is axially displaceable by means of displacement means. The axial positions of the displaceable discs determine the radial positions of the drive belt between the discs of the primary pulley and of the secondary pulley and thus the transmission ratio of the transmission unit. By operating the displacement means of both pulleys so that they are geared to one another, both the radial positions of the drive belt and the clamping forces which the discs of the pulleys exert on the drive belt are controlled.

The known variable DNR gear group is also known as a planetary gear, or epicyclic gearing for short, and is provided with a central sun wheel, with a number of and the outer planet gear is in each case in engagement with a ring gear which is placed around it and provided with an internal toothing and forms part of the epicyclic gearing. In the known automatic transmission, the sun wheel is driven by the engine, via the torque converter, while the planet gear carrier drives the primary shaft of the CVT unit. The epicyclic gearing is also provided with two clutches, a first of which or "Drive" clutch can couple the sun wheel directly to the planet gear carrier, in which case the epicyclic gearing provides a direct connection between the torque converter and the primary shaft of the CVT unit. A second or "Reverse" clutch is provided to lock the ring gear, in which case the sets of planet gears driven by the sun wheel roll over the ring gear and thus the planet gear carrier, and thereby the primary shaft of the CVT unit, is put into motion in a direction of rotation counter to that of the sun wheel. If both said clutches are open (in other words "Neutral"), the rotation of the sun wheel is not transmitted to the primary shaft of the CVT unit at all.

A drawback of the known automatic transmission is the complexity and the associated relatively high cost price of the DNR gear group used therein. In particular the fact that the planet gears are provided in sets of two contributes in a negative way. However, this embodiment is used in order to achieve the required reversal in the direction of rotation of the planet gear carrier with respect to the sun wheel when their speeds of rotation are similar, or in order to achieve a transmission ratio of at least substantially minus 1 between the speed of rotation of the planet gear carrier and that of the sun wheel when the "Reverse" clutch is closed (referred to below as: "in Reverse").

It is an object of the invention to provide a more simple design of the present transmission without substantially influencing its functionality. This object is achieved according to the invention by means of the automatic transmission according to Claim 1 below.

It is known that with a DNR gear group, the planet gears of which are in engagement with both the sun wheel and the ring gear (referred to below as: "single epicyclic gearing") in Reverse, an accelerating and/or a decelerating transmission is achieved depending on the specific embodiment of the epicyclic gearing. For example the German patent publication DE 103 58 280, which discloses the features of the preamble of claim 1, discloses such an automatic transmission with a CVT unit, a torque converter and a DNR gear group according to this latter design, denoted a single epicyclic gearing hereinafter. The transmission ratio to be achieved, defined as the speed of rotation of the output shaft divided by the speed of rotation of the input shaft of the epicyclic gearing, are in this case, for example, minus 1.5 and minus 0.66, so that such a single epicyclic gearing is accompanied by a significant reduction or a significant increase, respectively, of the engine and/or drive torque transmitted and delivered to the primary shaft of the CVT unit. It is true that the construction of this single epicyclic gearing is simpler and less expensive than the known epicyclic gearing with said sets of in each case two planet case, for example, minus 1.5 and minus 0.66, so that such a single epicyclic gearing is accompanied by a significant reduction or a significant increase, respectively, of the engine and/or drive torque transmitted and delivered to the primary shaft of the CVT unit. It is true that the construction of this single epicyclic gearing is simpler and less expensive than the known epicyclic gearing with said sets of in each case two planet gears, but in principle said opposite effects thereof at the level of the drive torque are undesirable. On the one hand because, due to the reduction in the drive torque, the vehicle can not accelerate sufficiently in Reverse and on the other hand, because the CVT unit cannot generate sufficient clamping force between the pulley discs and the drive belt to transmit the increased drive torque to the drive belt without slipping and/or causing damage (and/or that the design of the CVT unit would have to be modified especially in order to be able to process the highest level of drive torque which occurs only in Reverse).

However, with the automatic transmission according to the invention claimed in claim 1 and when using the accelerating variant of the single epicyclic gearing therein, the reduction in the drive torque by the accelerating epicyclic gearing is at least more or less compensated for by the increase in torque from the torque converter. In this case, the nominal torque ratio of the torque converter is preferably chosen to be equal to or greater than the absolute value of the transmission ratio of the single epicyclic gearing in Reverse. In particular, the square root of the nominal torque ratio of the torque converter, at least substantially, that is to say within a margin of plus or minus 15%, preferably 10%, equal to the absolute value of the transmission ratio of the single epicyclic gearing in Reverse. This is due to the fact that with normal acceleration of the vehicle from standstill, the torque converter increases the engine torque by a factor which is, at least approximately, given by the square root of the nominal torque ratio thereof.

In addition, it is also possible, according to the invention claimed in claim 2, to use the decelerating variant of the single epicyclic gearing. In this case, the lock-up clutch of the torque converter is closed, while the Reverse clutch of the epicyclic gearing is open in order to allow the internal combustion engine to run. Thereafter, the Reverse clutch can be closed partially or completely in order to accelerate the vehicle in Reverse from standstill. In this way, the highest possible level of the drive torque on the primary shaft of the CVT unit in Reverse does not have to differ much from the level in Drive. In Drive, only the torque converter increases the drive torque and in Reverse, only the single epicyclic gearing increases the drive torque. In this case, the absolute value of the transmission ratio of the single epicyclic gearing in Reverse is preferably chosen to be greater than the inverse value of the nominal torque ratio of the torque converter. In particular, the absolute value of the transmission ratio of the single epicyclic gearing in Reverse is, at least substantially, equal to the inverse value of the square root of the nominal torque ratio of the torque converter.

Thus, the invention makes the use of a single epicyclic gearing in the present transmission possible in an advantageously simple way, in which case said negative side effects thereof are at least largely prevented.

The invention will be explained in more detail by means of a non-limiting illustrative embodiment and with reference to the following figures, in which:
Fig. 1 shows, in a highly diagrammatic fashion, the known automatic transmission as part of a drive line for a vehicle.
Fig. 2 shows, likewise in highly diagrammatic fashion, a first example of an automatic transmission according to the invention.
Fig. 3 shows, likewise in highly diagrammatic fashion, a second example of an automatic transmission according to the invention.

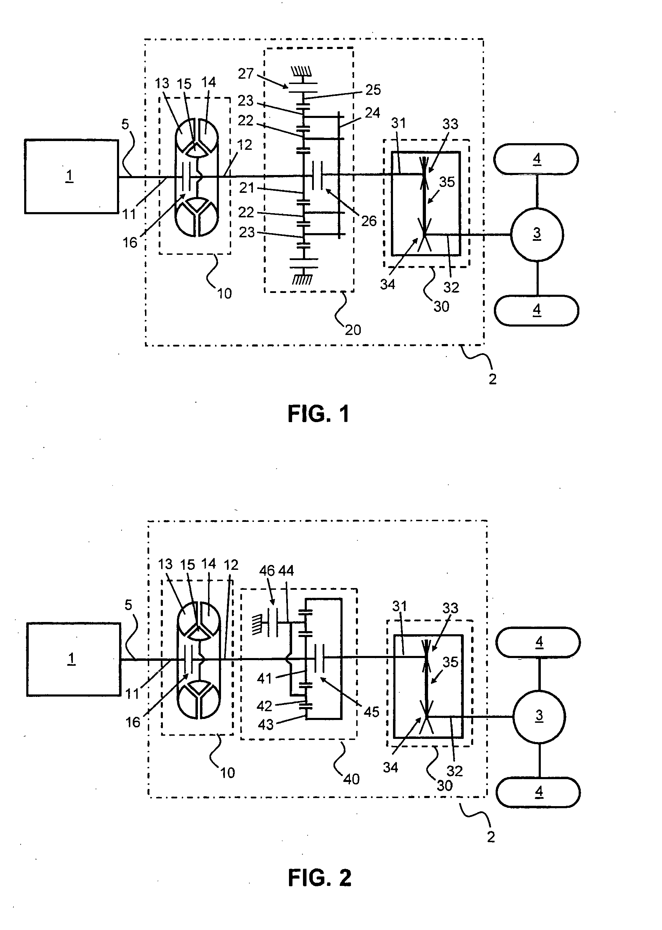

Fig. 1 shows a drive line for a vehicle with a driving engine 1, an automatic transmission 2 and with two wheels 4 which are driven via a differential 3 thereof. In the drive direction, the known automatic transmission 2 comprises, successively, a torque converter 10, a shiftable Drive-Neutral-Reverse or DNR gear group 20 and a Continuously Variable Transmission or CVT unit 30. Usually, a final drive, that is to say a gear stage comprising two or more gears, is present between the CVT unit 30 and the differential 3 (not illustrated).

The crankshaft 5 of the engine 1 is coupled to an input shaft 11 of the torque converter 10 which drives a pump wheel 13. A turbine wheel 14 of the torque converter 10 drives the output shaft 12 thereof. In a manner which is known per se, the pump wheel 13 drives the turbine wheel 14 by means of hydraulic liquid and a so-called stator 15 of the torque converter 10, in which case a drive torque of the input shaft 11 to the output shaft 12 can be increased. The torque converter 10 is furthermore provided with a lock-up clutch 16 by means of which the input shaft 11 and the output shaft 12 of the torque converter 10 can be selectively coupled with or decoupled from one another in the mechanical sense.

The DNR gear group 20 is provided with a central sun wheel 21, with a number of sets of in each case two planet gears 22, 23 which are in engagement therewith and the rotation axles of which are received in a common planet gear carrier 24, of which sets of planet gears in each case the inner planet gear 22 is in engagement with the sun wheel 21 and in each case the outer planet gear 23 is in engagement with a ring gear 25 which is placed around it and provided with an internal toothing. In this case, the engine 1 is coupled to the sun wheel 21 of the DNR gear group 20, via the torque converter 10, and the planet gear carrier 24 is coupled to (a primary shaft 31 of) the CVT unit 30.

The DNR gear group 20 is also provided with two clutches 26, 27, a first or "Drive" clutch 26 of which can couple the sun wheel 21 non-rotatably to the planet gear carrier 24, in which case a direct connection is produced between the torque converter 10 and (the primary shaft 31 of) the CVT unit 30. A second or "Reverse" clutch 27 is provided to lock the ring gear 25 while the Drive clutch 26 is open, in which case the sets of planet gears 22, 23 driven by the sun wheel 21 roll over the ring gear 25 and thus set the planet gear carrier 24 and thereby the primary shaft 31 of the CVT unit 30 in motion in a direction of rotation which is counter to that of the sun wheel 21. If both said clutches 26, 27 are open ("Neutral"), a rotation of the sun wheel 21 is not transmitted to the primary shaft 31 of the CVT unit 30 at all.

The CVT unit 30 is of the drive belt/pulley type and provided with a primary pulley 33 on the primary shaft 31, with a secondary pulley 34 on a secondary shaft 32 and with a drive belt 35 which is wound around both pulleys 33, 34. The secondary shaft 32 of the CVT unit 30 is coupled to the driven wheels 4 via a final drive (not shown) and the differential 3. This type of CVT unit 30 is as such generally known. In the CVT unit 30, the drive belt 35 is clamped between the pulley discs of the individual pulleys 33, 34 with a force which is sufficient to transmit the drive torque by means of friction from the primary shaft 31 to the secondary shaft 32. The greater this drive torque, the greater the clamping force required per pulley 33, 34.

A drawback of the known automatic transmission 2 from Fig. 1 is the fact that at least the DNR gear group 20 thereof is a relatively complex and expensive component. According to the invention, it is therefore preferred to use a less expensive, so-called single DNR gear group 40, the planet gears 42 of which are in engagement with both the sun wheel 41 and the ring gear 43. A first example of such a single DNR gear group 40 is illustrated in Fig. 2 as part of the automatic transmission 2 according to the invention.

The single DNR gear group 40 is also provided with two clutches 45, 46, a first of which or "Drive" clutch 45 can in this case couple the sun wheel 41 non-rotatably to the ring gear 43. The second or "Reverse" clutch 46 is now provided to lock the planet gear carrier 44. Since in this case the primary shaft 31 of the CVT unit 30 is coupled to the ring gear 43, this will be set in motion via the planet gears 42, with the "Reverse" clutch 46 closed, in a direction of rotation counter to the sun wheel 41. The speed of rotation of the ring gear 43 and/or the primary shaft 31 of the CVT unit 30 is in this case lower than that of the sun wheel 41. In other words, in the present embodiment, the DNR gear group 40 produces a decelerating transmission with a transmission ratio of the sun wheel 41 to the planet gear carrier 44 of, for example, minus 0.66, as a result of which the drive torque is significantly increased and as a result of which the load on the CVT unit 30 is greater with a closed "Reverse" clutch 46 (or in Reverse) than with a closed "Drive" clutch 45 (or in Drive).

Said greater load on the CVT unit 30 is in principle undesirable, so that, in practice, in the automatic transmission 2 according to the prior art the known, double DNR gear group 20 from Fig. 1 is used, by means of which a transmission ratio of, at least essentially, minus 1 can be achieved. However, according to the invention, the decelerating, single DNR gear group 40 can indeed be used if, when the vehicle is at a standstill, the lock-up clutch 16 of the torque converter 10 is closed and the "Reverse" clutch 46 is open in order to allow the internal combustion engine 1 to run. Subsequently, the "Reverse" clutch is completely or partly closed in order to accelerate the vehicle. In this way, the highest achievable level of drive torque on the primary shaft 31 of the CVT unit 30 with closed "Reverse" clutch 46 will not deviate much from the highest achievable level with closed "Drive" clutch 45. In this case, said transmission ratio of minus 0.66 matches a torque converter 10 with a nominal torque ratio of approximately 2.3 (=0.66^⁻²) very well.

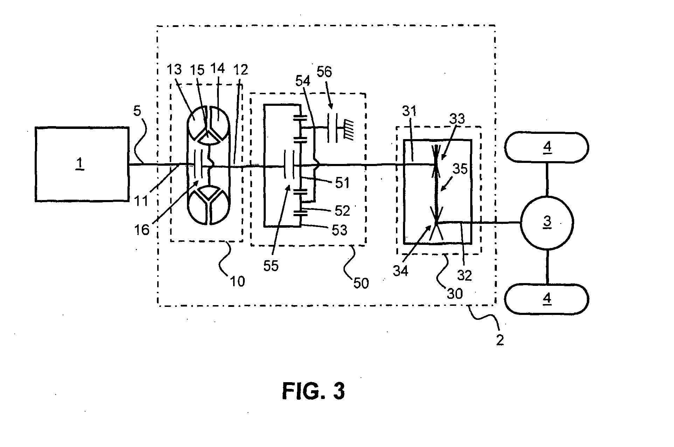

A second example of an, in this case accelerating, single DNR gear group 50 according to the invention is illustrated in Fig. 3. This accelerating, single DNR gear group 50 is also provided with two clutches 55, 56, a first of which or "Drive" clutch 55 can in this case couple the ring gear 53 non-rotatably to the sun wheel 51. The second or "Reverse" clutch 56 is now also provided to lock the planet gear carrier 54. Because the primary shaft 31 of the CVT unit 30 is coupled to the sun wheel 51 in this second example, it will be set in motion via the planet gears 52, with a closed "Reverse" clutch 56, in a direction of rotation counter to that of the ring gear 53 which is coupled to the output shaft 12 of the torque converter 10. The speed of rotation of the sun wheel 51 and/or the primary shaft 31 of the CVT unit 30 is in this case higher than that of the ring gear 53. The acceleration of the DNR gear group 50 can be, for example, minus 1.5, as a result of which the drive torque is significantly reduced and as a result of which the acceleration of the vehicle could be insufficient. However, according to the invention, the accelerating, single DNR gear group 50 can indeed be used if it is combined with a torque converter 10. In this case, the nominal torque ratio of the torque converter 10 is preferably chosen to be approximately equal to the square of the transmission ratio of the accelerating DNR gear group 50 in Reverse.

## Claims

1. Automatic transmission (2) provided with a torque converter (10), with a shiftable DNR gear group (20) comprising a sun wheel (41; 51), planet gears (42; 52) and a ring gear (43; 53), and with a Continuously Variable Transmission unit (30), with each planet gear (42; 52) of the DNR gear group (20) being in engagement with both the sun wheel (41; 53) and the ring gear (43; 53) thereof and with the DNR gear group (20) being arranged to achieve a negative transmission ratio with an absolute value greater than 1, **characterized in that** the square root of the nominal torque ratio of the torque converter (10) is, at least within a margin of plus or minus 15%, preferably 10%, equal to said absolute value of the transmission ratio of the DNR gear group (20).

2. Method for the operation of an automatic transmission (2) provided with a torque converter (10) comprising a lock-up clutch (16) which can be closed in order to mechanically couple an input shaft (11) and an output shaft (12) of the torque converter (10) to one another, with a shiftable DNR gear group (20) comprising a sun wheel (41; 51), planet gears (42; 52) and a ring gear (43; 53), each planet gear (42; 52) of which is in engagement with both the sun wheel (41; 53) and the ring gear (43; 53) thereof, which DNR gear group (20) can achieve a negative transmission ratio having an absolute value of between 0 and 1, and with a Continuously Variable Transmission unit (30), in which method the operating state in which the DNR gear group (20) achieves said negative transmission ratio is and/or can only be activated if and/or after the lock-up clutch (16) of the torque converter (10) has been closed.

## Patentansprüche

1. Automatikgetriebe (2), das versehen ist mit einem Drehmomentwandler (10), mit einer schaltbaren DNR-Radgruppe (20), die ein Sonnenrad (41; 51), Planetenräder (42; 52) und ein Hohlrad (43; 53) aufweist, und mit einer stufenlos verstellbaren Getriebeeinheit (30), wobei jedes Planetenrad (42; 52) der DNR-Radgruppe (20) sowohl mit dem Sonnenrad (41; 51) als auch mit dem Hohlrad (43; 53) in Eingriff ist und wobei die DNR-Radgruppe (20) dafür ausgelegt ist, ein negatives Übersetzungsverhältnis mit einem Absolutwert größer als 1 zu erzielen, **dadurch gekennzeichnet, dass** die Quadratwurzel des Nenn-Drehmomentverhältnisses des Drehmomentwandlers (10) wenigstens innerhalb eines Bereichs von plus oder minus 15 %, vorzugsweise 10 %, gleich dem Absolutwert des Übersetzungsverhältnisses der DNR-Radgruppe (20) ist.

2. Verfahren zum Betreiben eines Automatikgetriebes (2), das versehen ist mit einem Drehmomentwandler (10), der eine Überbrückungskupplung (16) aufweist, die geschlossen werden kann, um eine Eingangswelle (11) und eine Ausgangswelle (12) des Drehmomentwandlers (10) mechanisch miteinander zu koppeln, mit einer schaltbaren DNR-Radgruppe (20), die ein Sonnenrad (41; 51), Planetenräder (42; 52) und ein Hohlrad (43; 53) aufweist, wobei jedes Planetenrad (42; 52) sowohl mit dem Sonnenrad (41; 51) als auch mit dem Hohlrad (43; 53) in Eingriff ist, wobei die DNR-Radgruppe (20) ein negatives Übersetzungsverhältnis erzielen kann, das einen Absolutwert im Bereich von 0 bis 1 besitzt, und mit einer stufenlos verstellbaren Getriebeeinheit (30), wobei in dem Verfahren der Betriebszustand, in dem die DNR-Radgruppe (20) das negative Übersetzungsverhältnis erzielt, nur aktiviert ist und/oder werden kann, wenn und/oder nachdem die Überbrückungskupplung (16) des Drehmomentwandlers (10) geschlossen worden ist.

## Revendications

1. Transmission automatique (2) pourvue d'un convertisseur de couple (10), d'un groupe d'engrenages DNR commutable (20) comprenant une roue solaire (41 ; 51), des roues planétaires (42 ; 52) et une couronne (43 ; 53), et d'une unité de transmission à variation continue (30), chaque roue planétaire (42 ; 52) du groupe d'engrenages DNR (20) s'engrenant à la fois avec la roue solaire (41 ; 51) et la couronne (43 ; 53) de celui-ci, et le groupe d'engrenages DNR (20) étant conçu pour réaliser un rapport de transmission négatif présentant une valeur absolue supérieure à 1, **caractérisée en ce que** la racine carrée du rapport de couple nominal du convertisseur de couple (10) est égale à ladite valeur absolue du rapport de transmission du groupe d'engrenages DNR (20), au moins à une marge de plus ou moins 15 %, de préférence 10 %, près.

2. Procédé pour le fonctionnement d'une transmission automatique (2) pourvue d'un convertisseur de couple (10) comprenant un embrayage de blocage (16) qui peut être fermé afin d'accoupler mécaniquement l'un à l'autre un arbre d'entrée (11) et un arbre de sortie (12) du convertisseur de couple (10), d'un groupe d'engrenages DNR commutable (20) comprenant une roue solaire (41 ; 51), des roues planétaires (42 ; 52) et une couronne (43 ; 53), chaque roue planétaire (42 ; 52) du groupe d'engrenages DNR s'engrenant à la fois avec la roue solaire (41 ; 51) et la couronne (43 ; 53) de celui-ci, lequel groupe d'engrenages DNR (20) peut réaliser un rapport de transmission négatif présentant une valeur absolue entre 0 et 1, et d'une unité de transmission à variation continue (30), dans lequel procédé l'état de fonctionnement dans lequel le groupe d'engrenages DNR (20) réalise ledit rapport de transmission négatif est et/ou peut seulement être activé si et/ou après que l'embrayage de blocage (16) du convertisseur de couple (10) a été fermé.
